# EUROPEAN PATENT APPLICATION

(11) **EP 3 667 545 A1**
(43) Date of publication of application: **17.06.2020**
(21) Application number: 19215702.2
(22) Date of filing: 12.12.2019
(51) Int. Cl.: G06F 30/00, G06F 111/02, G06F 111/16, G06F 113/22

(54) **SYSTEM AND METHOD FOR CUSTOMIZING MACHINED PRODUCTS**

(30) Priority: 13.12.2018 CN 201811522946
(71) Applicant: Heyuan Lung Kee Metal Products Co., Ltd, Heyuan, Guangdong (CN)
(72) Inventor: SIU, Yu Hang Leo, Sha Tin, Hong Kong (CN)
(74) Representative: Wójcik, Grazyna Agnieszka

(57) **Abstract**

The present invention relates to a system and method for customizing a machined product. In one embodiment, a method for obtaining metadata of a customized product is provided, comprising: establishing, in a networked server, a standard product metadata repository for storing product data of a plurality of different types of standard products and a customized item metadata repository for storing alternative data of a customized item corresponding to each standard product; based on a type of a standard product being selected by a customer through a remote browser client, displaying via the server a 2D visualized image of the selected type of the standard product on the client, and providing one or more customized item options available for the selected type of the standard product; based on the one or more customized item options being selected by the customer through the remote browser client and for one or more post-processing item options, extracting alternative data corresponding to the selected customized items; and combining the product data of the standard product of the type selected by the customer and the extracted alternative data of the post-processing items to obtain metadata of the customized machining product.

## Description

### TECHNICAL FIELD

The present invention relates to the field of customizing machined products, and particularly, to customizing machined steel products online through a network.

### BACKGROUND

For a long time in the current machining industry, a machined product which is customized by a customer is processed based on the drawing of the product. When a customer wants to customize a product, the customer needs to draw the drawing of the product by using computer-aided design CAD software first, and then send the drawing to a manufacturer's order-receiving department. The parameters about the drawing are inputted into the pricing system by a professionally trained specialist of the manufacturer's order-receiving department after he has understood the CAD drawing provided by the customer. The price for the product is calculated by the pricing system based on the input parameters. The specialist provides the quotation of the product to the customer based on the calculated price. During the quotation, the customer and the specialist may need to communicate with each other through data transmission back and forth for several times to complete the quotation.

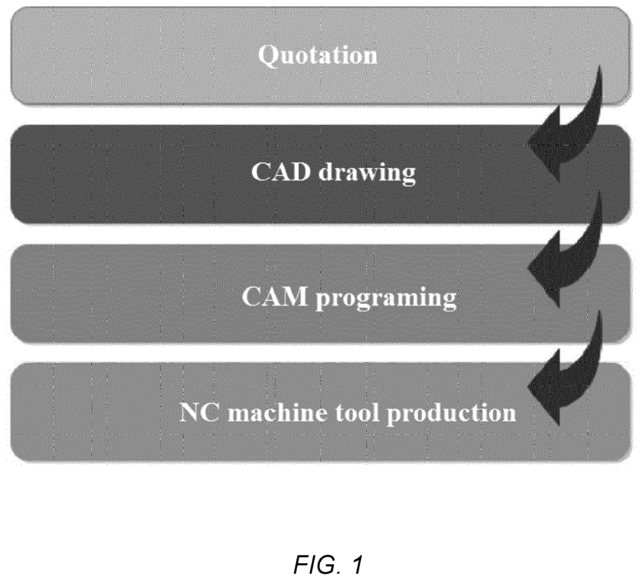

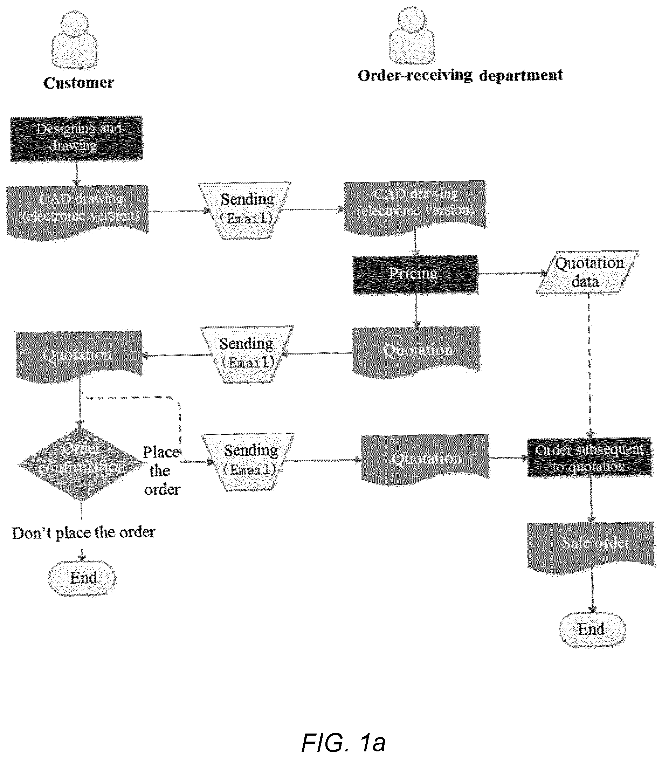

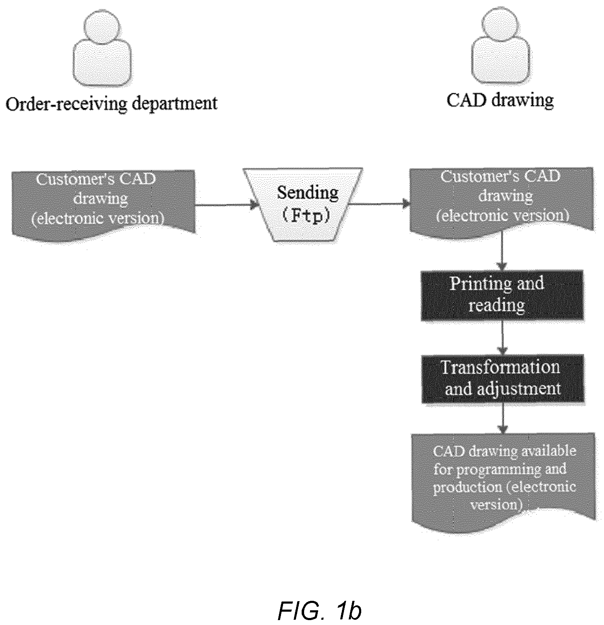

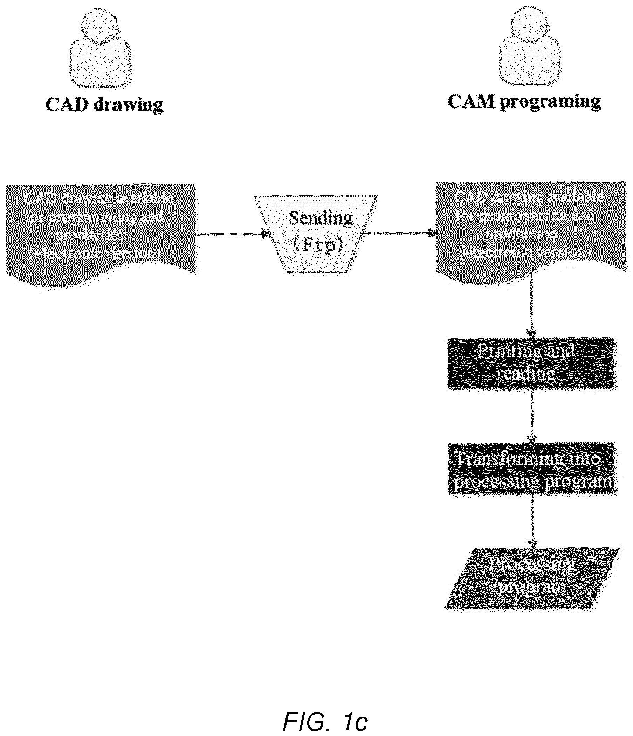

Next, the product requested by the customer will be produced by the manufacturer by machining the raw material based on the CAD drawing provided by the customer. The contents of different CAD drawings provided by different customers cannot be identified by a processing system, and even the drawing engineers, drawing habits, and standards from different customers are also different, so different CAD drawings from different customers typically need to be transformed and modified by the CAD drawing engineers of the manufacturer for standardization into the electronic drawings that can be identified by the computer-aided manufacturing CAM software, so that a processing process for products can be completed quickly and accurately by production stuff of the manufacturer without unnecessary guesswork. The processing requirements expressed in the electronic drawing are then programmed by CAM engineers into a processing program that can be identified by the NC (Numerical Control) processing device, thereby completing the pre-production preparation process. After the preparation process is completed, the programmed processing program is uploaded into a NC machine and the NC machine is operated by the production stuff, to complete the product processing. FIG. 1 shows a general process of the mode for processing a product based on its drawing in the prior art.

In the mode for processing a product based on its drawing described above, it takes several hours to several days for an entire pre-production preparation process from a customer's preparation of ordering to generation of a programmed processing program, and the preparation process may be cooperated by different professional and technical stuff, depending on the complexity of the customized product. During a quotation process, because of the two-way interactive communication between the customer and the specialist, multiple data transmissions back and forth and queuing in time are inevitable, resulting in an inefficient quotation process.

Existing CAD software and CAM software, which are not dedicated to customized machined products, are "multi-functional," have integrated too many professional drawing functions to meet the requirements for drawing in all industries, and may be used proficiently by professionally trained users to solve the problems in respective applications.

FIGS. 1a-1c respectively show three separate processes for manual pricing and quotation of a customized product to a customer, drawing a standard CAD drawing available for programming and production, and transforming a standard CAD drawing into a processing program, based on its drawing provided by the customer in the prior art.

In the existing mode for processing a product based on its drawing, the above three processes are independent from each other. There is a need for a system that links several processes from customer customization to production and multi-layer applications, avoids the complexity of professional software, and reduces the barriers for use by operators.

### SUMMARY

The system of the present invention belongs to an "expert system" that solves multi-level comprehensive problems, which utilizes a web-based online shopping interface to collect necessary parameter data, presents visualized display results simultaneously, and links several fields and multi-layer applications, at the same time of avoiding the complexity of professional software and reducing the barriers for use by operators.

The present invention discloses a method for obtaining metadata of a customized machined product to automatically collect necessary parameter data based on customer inputs. The method comprises: establishing, in a networked server, a standard product metadata repository for storing product data of a plurality of different types of standard products and a customized item metadata repository for storing alternative data of a customized item corresponding to each standard product; based on a type of a standard product being selected by a customer through a remote browser client, displaying via the server a 2D visualized image of the selected type of the standard product on the client, and providing one or more customized item options available for the selected type of the standard product; based on the one or more post-processing item options being selected by the customer through the remote browser client and for one or more post-processing item options, extracting alternative data corresponding to the selected post-processing items; and combining the product data of the standard product of the type selected by the customer and the extracted alternative data of the post-processing items to obtain metadata of the customized machined product.

The invention also discloses a system for customizing a machined product, including: a standard product metadata repository for storing product data of a plurality of different types of standard products; a customized item metadata repository for storing alternative data of a customized item corresponding to each standard product; a display component for, based on a type of a standard product being selected by a customer through a remote browser client, displaying a 2D visualized image of the selected type of the standard product on the client, and providing one or more customized item options available for the selected type of the standard product; a customized data extracting component for, based on the one or more customized item options being selected by the customer through the remote browser client and for one or more post-processing item options, extracting alternative data corresponding to the selected customized items; a calculating component for combining the product data of the standard product of the type selected by the customer and the extracted alternative data of the post-processing items to obtain metadata of the customized product; and a pricing component for extracting metadata for pricing from metadata of the customized product obtained after combination, and sending a calculated price of the customized product to the user's browser client.

According to the present invention, without using a professional CAD software, a customer can design a product through self-service in a WYSIWYG (what you see is what you get) interactive manner in the web environment on the online shopping platform, based on the selected type of a standard mold base. The design process is WYSIWYG and the effect for displaying is similar to that of the professional CAD software. What's most important is that the system for customizing a machined product of the present invention can collect necessary parameter data automatically based on customer inputs, calculate and store the collected necessary data, and send the necessary data for product processing. Subsequent automatic pricing, automatic generation of CAD drawings, and automatic CAM programing are therefore possible.

After the customer's product processing requirements are digitized, according to the present invention, CAD and CAM processes before production are completed automatically by automatic programming, to realize full-automatic direct production, thereby reducing the processing time and costs for manual handling. The developing cycle for customer's molds has been shortened to a half of that of the original in recent years. In addition, the involvement of the support staff is reduced and is not limited by general office hours according to the present invention, which significantly improves the effectiveness in customized mold manufacturing.

### BRIEF DESCRIPTION OF THE DRAWINGS

The foregoing and other features and advantages of various embodiments of the present invention will become apparent through the following detailed description in conjunction with the accompanying drawings.
FIG. 1 shows a production process of the mode for processing a customized product based on its drawing provided by a customer according to the prior art;
FIG. la shows a flow of pricing and quoting for a customized product to a customer based on its drawing provided by the customer according to the prior art;
FIG. 1b shows a flow of drawing a standard CAD drawing available for programming and production based on a drawing of a customized product provided by the customer according to the prior art;
FIG. 1c shows a flow of transforming a CAD drawing available for programming and production into a processing program according to the prior art;
FIG. 2 shows a flow chart of automatically quoting for a product designed by a customer through self-service on an online shopping platform, generating an order, automatically generating a CAD drawing available for programming and production and a processing program, according to the present invention;
FIG. 3 shows a flow chart of automatically quoting for a product designed by a customer through self-service on an online shopping platform, and generating an order, according to the present invention;
FIG. 4 shows a 2D graphical display 401 of a customer-selected standard mold base displayed on a remote browser client and parameters and a list of available options 402 relating to the customer-selected standard mold base, according to the present invention;
FIG. 5 shows a self-service opening frame interface in which "self-service opening frame" is selected in FIG. 4;
FIG. 6 shows a more complicated "self-service opening frame" interface than that in FIG. 5;
FIG. 7 shows an automatically generated order according to an embodiment of the present invention;
FIG. 8 shows a drawing automatically generated by an ALP programming system according to an embodiment of the present invention based on metadata required for a processing program, wherein the metadata is automatically acquired;
FIG. 9 shows a processing program automatically generated by an ALP programming system according to an embodiment of the present invention, wherein the processing program is called by a NC device; and
FIG. 10 shows three ways for drawing a square-shaped rectangle after the metadata about the rectangle in metadata is obtained.

### DETAILED DESCRIPTION

All terms (including technical and scientific terms) used herein have the same meaning as generally understood by those of ordinary skill in the art to which this invention belongs, unless otherwise defined. It will be further understood that terms (such as those defined in generally used dictionaries) should be interpreted to have a meaning consistent with their meaning in the relevant technical background and/or in this specification, and should not be interpreted in an idealized or over-formal sense, unless defined explicitly herein.

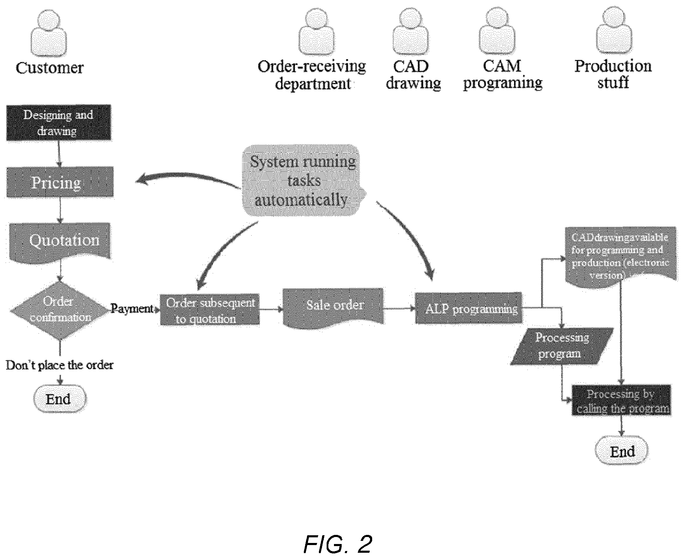

FIG. 2 shows a flow chart of automatically pricing based on necessary parameter data collected and inputted by the customer during the self-service customization of a product on an online shopping platform, generating an order, and automatically generating a CAD drawing available for programming and production and a processing program, according to the present invention.

In the present invention, relevant data of products designed by customers on the online shopping platform through self-service may be collected by the system through the platform, and thus subsequent automatic pricing, automatic generation of CAD drawings available for programming and production, and automatic generation of processing programs are possible.

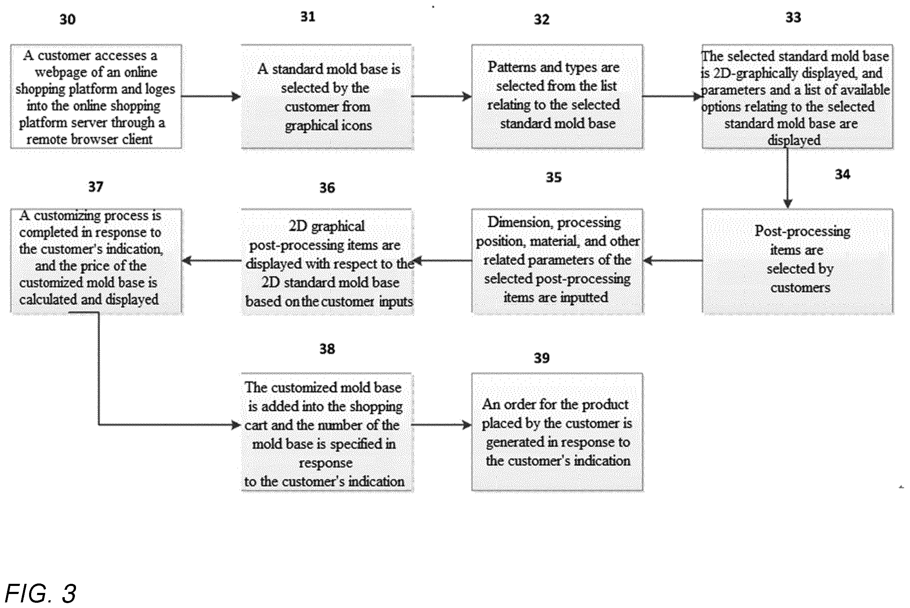

FIG. 3 shows a flow chart of design of a product by a customer through self-service on an online shopping platform, and automatic quoting, according to the present invention.

In FIG. 3, block 30 indicates that a customer accesses a webpage of an online shopping platform server and loges into the online shopping platform server through a remote browser client; block 31 indicates that a standard mold base is selected by the customer from many graphical icons which represent many different standard mold bases respectively; block 32 indicates that patterns and types are selected from the list relating to the selected standard mold base; block 33 indicates that the selected standard mold base is 2D-graphically displayed, and parameters and a list of available options relating to the selected standard mold base are also displayed, wherein the list may include dimension , material, and available post-processing items and their related list of options, and wherein data of dimensions may be inputted, and materials and available post-processing items may be selected by the customer as needed; block 34 indicates that post-processing items are selected by customers; block 35 indicates that dimension , processing position, material, and other related parameters are inputted by the customer in the list associated with the selected post-processing items; block 36 indicates that 2D graphical post-processing items are displayed with respect to the 2D standard mold base based on the customer inputs; block 37 indicates that a customizing process is completed in response to the customer's indication, and the price of the customized mold base is calculated and displayed; block 38 indicates that the customized mold base is added into the shopping cart and the number of the mold base is specified in response to the customer's indication; and block 39 indicates that an order for the product placed by the customer is generated in response to the customer's indication.

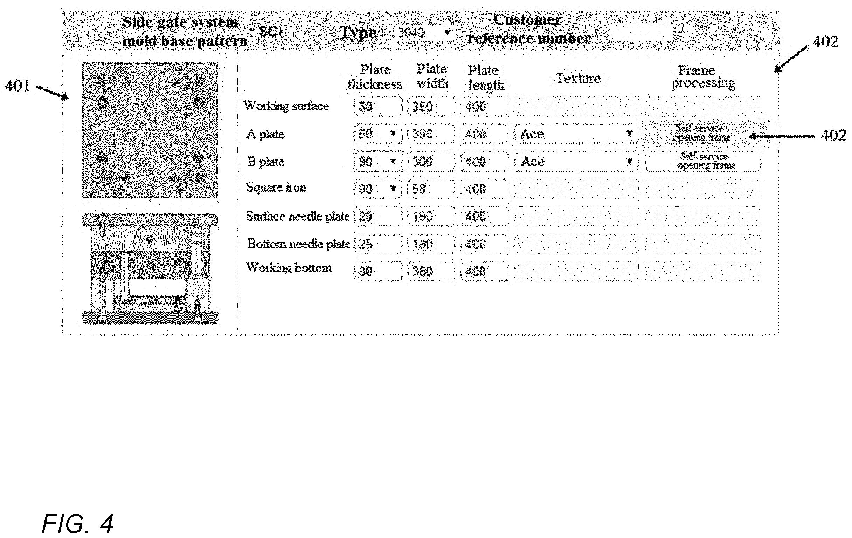

FIG. 4 shows a 2D graphical display of a customer-selected standard mold base displayed on a remote browser client and parameter data and a list of available options relating to the customer-selected standard mold base, according to the present invention. In this embodiment, thickness and texture material of A plate and B plate can be selected by the customer, respectively.

In the embodiment shown in FIG. 4, if an additional processing service, such as "opening frame," is selected by a customer based on the selected standard mold base, the option of "self-service open frame" 403 shown in FIG. 4 may be selected, and an online self-design state is entered.

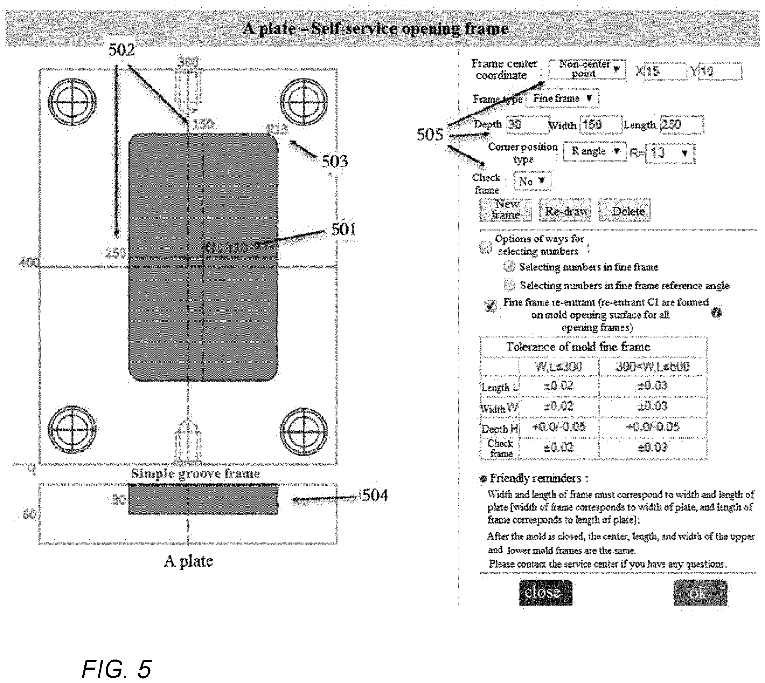

FIG. 5 shows a self-service opening frame interface in which "self-service opening frame" is selected in FIG. 4. In this interface, the customer can customize an opening frame on the 2D graphical standard mold base as shown in Fig. 4 by selecting a series of parameters according to the requirements of the product.

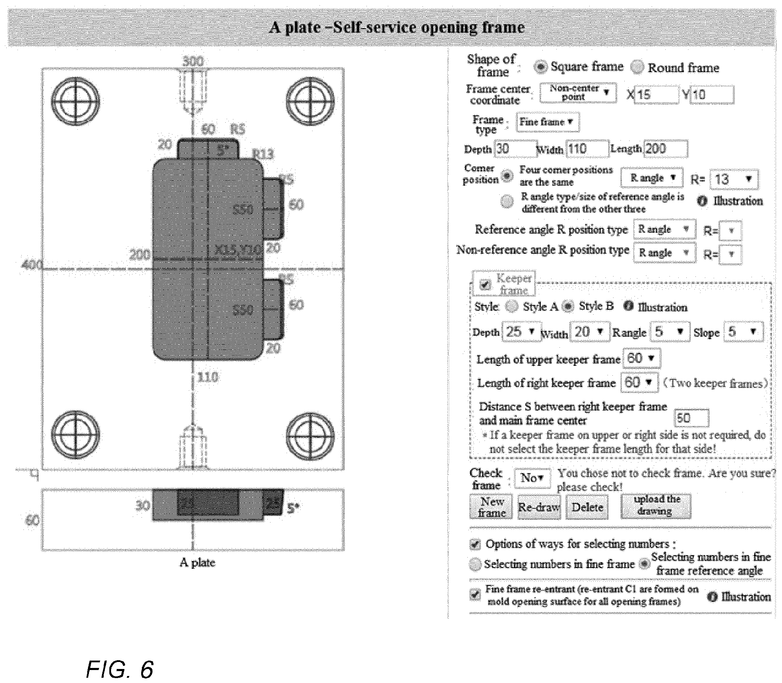

FIG. 6 shows a more complicated "self-service opening frame" interface than that in FIG. 5.

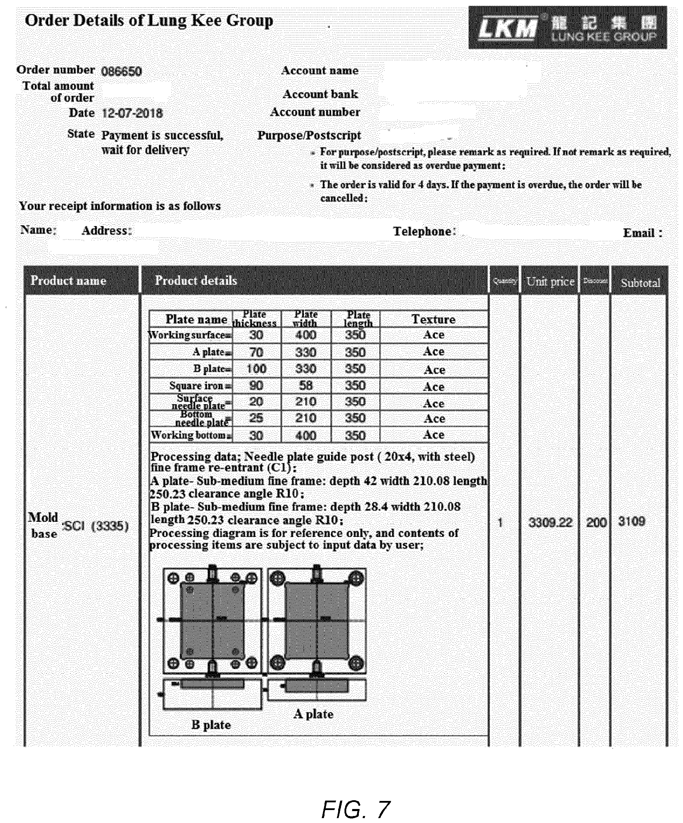

FIG. 7 shows an automatically generated order according to an embodiment of the present invention.

A method disclosed in the present application for implementing the customization of 2D drawings using a web technology includes at least the following steps: establishing a metadata repository of standard mold bases, customizing post-processing, combining metadata, collecting necessary parameter data based on customer inputs, pricing customized products automatically, and producing CAD drawings and performing CAM programming automatically. A detailed description of each step is as follows.

### Establishing a metadata repository of standard mold bases

Metadata of a customer-customized mold base need to be obtained, so that necessary parameter data for automatic pricing can be collected when a customer customize a mold base through self-service, and it is possible to generate CAD drawings available for programming and production automatically and processing programs automatically.

A method for obtaining metadata of a customer-customized mold base of the present invention is described in detail below.

First, a bill of materials (BOM) is established for standard mold bases of various patterns and types of the manufacturer. For various components in the established BOM of each type of standard mold base, each component (plate and part) is defined in the database with one or more parameters and respective parameter values. The one or more parameters are used to define the shape of each component, such as cube, cylinder, thread, or a combination thereof, and the dimension, of which, for example, parameters for a cube include data about length, width, and thickness; and parameters for a cylinder include data about diameter, and length, etc. For a complex assembly, its sub-components may be defined at first, and each sub-component may then be defined one by one with one or more parameters and is combined according to the tree hierarchy structure in the database.

A bill of processing items (BOP) is also established for each type of standard mold base. In the machining industry, a processing item refers to one or more processes that remove unnecessary parts from the raw material on the solid material by various cutting methods, such as frame opening, and drilling, etc. Similarly, the shape and the dimension of a processing item need to be defined with a plurality of parameters. The shape parameters of a processing item include cube, cylinder, thread, and a combination thereof. The dimension parameters for frame opening of a processing item, for example, include length, width, depth, and slope. The dimension parameters also include the type and the size of the corner, such as an R angle and a clearance angle, and the center coordinates (X, Y coordinates) relative to the plate in consideration of the tool's entry and exit. The dimension parameters for drilling of a processing item include diameter, and depth, etc. Similar to the definition of each component, for a processing item, sub-components for the processing item may be defined at first, and each sub-component may then be defined one by one with one or more parameters and is combined according to the tree hierarchy structure in the database.

If a customer needs to order a standard mold base, the customer can enter the online shopping platform and create a mold base quotation on the browser client. After the pattern and type for the mold base selected by the customer is read by the system, a request for metadata of the pattern and type for the mold base is initiated to a back-end server so that the metadata of the selected mold base instance may be found and generated from a metadata repository. The metadata is encapsulated in a Json format for example and sent to the client, which may receive and cache the instance of the metadata. On this basis, the customer can make a series of selections to order a standard mold base.

### Customizing post-processing

In a conventional online shopping platform having a self-service function in the art, only a limited number of options with several fixed values are provided to customers. The present invention is different from the conventional technology in that the present invention allows any value within the allowed range to be entered by the customer, so that the customer can add non-standard post-processing items with an infinite number of different permutations and combinations in theory.

In one embodiment, if a customer needs to add a personalized processing item to a specific type of a selected standard mold base, the customer can perform an online design based on a 2D drawing for customized post-processing, after selection of the type of the standard mold base. That is, the present invention provides customers with an unlimited number of combinations of non-standard BOM and BOP items with a standard mold base.

After a metadata repository of standard mold bases is established, for enabling further customization of various types of mold bases, types of post-processing (basic shapes and simple combinations of basic shapes) may be defined based on definitions of standard mold bases, so that customers can define and effectively express the required processing items by just adopting intuitive and simple operations. Based on the product requirements and a 2D graphic of a corresponding processing item displayed, a series of parameters may be selected by a customer through a self-service processing interface of the corresponding processing item. And customized post-processing can be defined through input of required values within the allowed range.

In one embodiment, if a customer wants to add an opening frame to a selected standard mold base, the icon of a self-service opening frame can be selected to enter the self-opening frame interface. At this point, Java Script function is called automatically by the system to read the metadata, automatically transform the metadata into a 2D graphic of BOM and BOP objects corresponding to the mold base according to a mapping definition rule of the metadata, and draw the 2D graphic on the browser, achieving dynamic visualization of abstract data. When the customer adds a new customizing processing, transformation between a visualized graphic of the browser and metadata such as in a Json format is performed automatically by using a Java Script program, and the 2D graphic is displayed synchronously in real time. Interactive operations can be performed infinite times by the customer, and transformation between graphics and metadata will be automatically performed in each operation. Once operations for customization are completed and submitted, the latest metadata will be sent from the browser to a back-end server. The back-end server will combine the customized data with the metadata of the stored standard mold base to obtain the customized metadata of the mold base instance.

In a specific embodiment, when a customer adds an opening frame to a selected standard mold base, the following parameters are required to define the opening frame item:
Coordinate setting, for positioning relative to the plate. There are multiple options. The processing position can be determined according to shift of the center point of the (X, Y) plane of the plate to any direction (or coincidence with the center of the plate when the offset in the (x, y) direction is (0, 0));
Dimension definition, for determining the extension range in the (X, Y) plane of the plate. The X direction and the Y direction can be determined in advance with reference to the definition of the standard mold base;
Processing characteristics. For example, angular characteristics of an opening frame need to be defined to clarify the features of corners. In an example shown in the figure below, a reference angle is defined as an R-angle form with a radius of 13 mm. Three remaining angles are in the form of a clearance angle with a radius of 10 mm. These features are combined with the main frame into a combined processing.

For example, in the embodiment shown in FIG. 5 where an opening frame is added to a standard mold base shown in FIG. 4:
501 indicates the distance of the shift of the center, with X15 and Y10 representing that a shift of 15 mm to the right in the X direction and a shift of 10 mm to the top in the Y direction;
502 indicates the dimension of the opening frame, with 150 mm in the width direction and 250 mm in the length direction;
503 indicates that four arc angles are all R angles of 13 mm. Of course, other types and sizes can also be selected by customers;
504 indicates the depth of the opening frame in the depth direction, so that contents of 3D processing can be fully expressed by exceeding 2D limitations, and;
505 indicates that all of processing items shown in the figure are calculated from specific dimensions and displayed to equal-scale, and thus what you see is what you get. The processing items can freely be changed and adjusted on demand until customer's requirements are met.

In the "self-service opening frame" interface shown in FIG. 5, an equal-scale processing drawing is displayed in the illustrated area after a series of parameters are selected and their specific values are entered by the customer. In the present invention, the target for visualized design of WYSIWYG post-processing is achieved during the definition of visualized post-processing. In other words, a visualized feedback is presented for each design operation performed by the customer. The present invention is different from other Internet online designs and interactive games in that, according to the present invention, each design operation performed by the customer has its own independent coordinate system, and strict dimension requirements exist for each presented graphic. Sizes of various graphics and lengths of various lines are presented to equal-scale (these parameters are enlarged or reduced together, regardless of display area of the screen. That is, the displayed dimension value ratio, which is consistent with the definition in metadata, cannot be changed). If necessary, the parameters can be freely changed and adjusted by the customer based on the visualized feedback until the customer's requirements are met. Furthermore, definition of depth of the opening frame is provided in addition to presentation of the 2D drawing, so that contents of 3D processing can be fully expressed by exceeding 2D limitations.

There are already similar commercially available tool softwares that allow customers to design online. However, such implementations are usually based on CAD software, which have special requirements for a web browser (for example, a specific plugin needs to be installed), and requires operators to have drawing skills. In addition, most producers who introduce such implementations are not steel plate (mold base) manufacturers. Therefore, such implementations can generally only achieve a limited number of customizations such as plate replacement. Thus, compared with the existing tool software for online design, the customized post-processing process of the present invention allows to enter any value within the permitted range, with theoretically an unlimited number of permutations and combinations.

Compared with the existing tool software for online design, the present invention employs a web technology to simulate CAD so as to realize a self-processing man-machine interface without relying on CAD software as a background engine. Specifically, the present invention employs a web technology to simulate the coordinate system in CAD so that each object in the dynamic graphic has a "coordinate" and a "dimension." Regardless of the type of the display device, an enlarged or a reduced display, or the occupied pixels, the "coordinates" and "dimension" that represent products and processing items will not be changed.

The concept of "block" in CAD is simulated with the web technology. According to the features of the mold base industry, certain BOP objects are combined properly into a "large object". Its proprietary metadata are manipulated according to the object, and points, lines, and other small features in the graphic are shielded.

A specific object in a picture cannot be selected in a traditional browser, so the function of selecting and manipulating objects in the CAD system is simulated by employing the web technology. The graphics in the present invention are composed of a plurality of "BOM objects" and "BOP objects" associated with each other. Each object has its own corresponding metadata, which can be selected individually or in groups to edit and manipulate each object.

The web technology is used to simulate the features of the object manipulated in real-time in CAD. Each manipulation of a certain BOP object will cause the feedback refreshed immediately, and the intermediate process between the client and the server does not need to go back and forth multiple times.

The web technology is used to simulate the variability of CAD contents. Different from traditional concepts of "stamp" and "icon", the "stamp" and "icon" herein can be enlarged or reduced as a whole and placed on demand to achieve defined customized functions. However, the internal graphics that form the "stamp" are fixed and cannot be changed. According to the present invention, graphics are drawn dynamically based on metadata. When the metadata are changed, any part that forms the object can also be changed (deformed, displaced, scaled, increased, or decreased).

### Combining metadata

In the process of customizing post-processing, after a type of a standard mold base is selected by the customer, metadata of the selected standard mold base instance, including BOM and BOP, are extracted from the metadata repository by the system and initialized to the customer's order instance. Any post-processing definition of a certain plate by the customer is combined into metadata instance of the customized mold base. The metadata in which instances are combined can be passed to subsequent stages for automatic quotation, automatic production of standardized CAD drawings, and automatic CAM programming.

In the present invention, during visualization of definitions of post-processing, the inputs for the visualized design performed by the customer in the client are transformed into data that can be stored in the repository and can be transferred to various different systems for calculation. There is no need to input or store any images during the entire process for inputting and extracting data. Therefore, an important advantage of the present invention is that the complex process of processing and analyzing images is eliminated, and the possibility of losing key data during scaling due to the fixed image pixels (for example, the dimension figure may not be identified or may be identified incorrectly when the pixel is too low) is also avoided. The present invention can restore a CAD drawing of a product possessing the customer's specific requirements by using the data inputted by the customer.

The present invention also realizes the transition between data storage and calculation display. Processing items required by a customer are presented in a WYSIWYG manner at the client side, while the data representing the graphic inputted by the customer after submission are stored as metadata in the back-end database. Once these data adjusted according to customer's requirements have been obtained, they can be utilized in a number of different systems by using different technologies in subsequent processing. For example, these data may be read by the engine of the pricing system to generate real-time quotations automatically, drawings that reproduce customized products may be produced automatically with the CAD technology, and CAM programming may be performed automatically with the CAM technology for transformation into a machine-readable processing program. In general, among the metadata, metadata relating to the pricing system include, but are not limited to, data relating to the volume of the mold base. For example, when the customer needs to customize an opening frame in a standard mold base, the dimension, depth, and position on the opening-frame mold base of the frame can be inputted within the allowed value ranges. In these inputted data, the dimension and depth of the opening frame relate to the volume, so the pricing system will extract these volume-related metadata for price calculation. For automatic CAD drawing and automatic CAM programming, in addition to the dimension and depth of the opening frame, its position on the opening-frame mold base will also be used. Therefore, it will be understood by those skilled in the art that almost all the combined metadata may be utilized in the subsequent processing.

### Pricing automatically

In the pricing system of the present invention, each standard mold base of a different pattern and a type has its base price accordingly, based on weights of various materials in the BOM and processing items in the BOP.

Since the metadata are combined according to the changed BOM and BOP items during the customized post-processing, the present invention enables re-pricing on the basis of the base price of each standard mold base with regard to the changed BOM and BOP items, making the realization of online real-time dynamic quotation possible.

Metadata for pricing are extracted from the collected BOM (Bill of Materials) and BOP (Bill of Processing Items), and necessary parameters are transferred into the pricing system, thereby the pricing results can be returned directly to the customer.

In the present invention, necessary parameters for metadata of a custom mold base relating to the pricing system include, but are not limited to, dimension information of the BOM materials constituting the mold base, such as width, length, and height of each piece of plate (measured by the actual length of the object, such as millimeters), and diameter and length of each part (which are nested in a tree hierarchy structure in the case of multiple features); and dimension information of the BOP processing items in the mold base (defined by either a standard mold base, or a user-customized post-processing). According to the applied materials, dimension data of each processing and the opening frame records (width, length, depth, corner feature and size) are stored in a tree hierarchy structure. If it is a processing for a type of aperture, diameter, depth and other parameters of the aperture will be recorded.

In the present invention, the pricing of a set of mold bases is basically divided into two parts: material cost and processing service cost. There are two important variables for material cost: one is the texture of the material, since materials of different textures generally have different unit prices; and the other is the weight of the material, since the larger the dimension of the same material is, the heavier the weight is and the higher the cost is. There will also be additional pricing algorithms for special shapes and proportions of materials. To calculate the cost of a processing service, the devices required for such service and time duration (man-hours) of occupation of each device have to be referred. The ability to calculate man-hours determines the accuracy of the processing pricing.

If BOM (Bill of Materials) and BOP (Bill of Processing Items) metadata have been collected for each set of mold bases, the weight of each material component can be calculated using metadata of the dimension in the BOM, and the material cost of each material component can be calculated with reference to the selected texture of the material component. Time duration of occupation of each main device can be calculated by using processing dimension data of each processing item in the BOP, and the cost of the processing item can be calculated with reference to the unit time-duration price for each main device. Therefore, the price of the overall customized mold base can be calculated through iterative addition according to the tree hierarchy structure.

For example, when the customer modifies a BOM item during the customized post-processing process, e.g., the thickness of the plate is modified, the plate weight will be recalculated based on the increased thickness after the pricing system receives the modified thickness value of the plate included in the combined metadata. Based on the calculated plate weight and the material unit price, the price of the plate is recalculated to obtain the modified BOM item price. Similar calculations can be made for processing items. That is, based on the basic price of the processing item in the BOP of the standard mold base, the price of the post-processing item is recalculated according to the modification or addition of the processing item during the customized post-processing. For example, if a customer adds a new processing item during the customized post-processing process, the processing cost (time and unit price of the processing type) can be calculated according to metadata of the added processing item, thereby performing online real-time re-pricing based on the combined metadata.

### Producing standardized CAD drawings automatically

Computer aided design (CAD) is an important application area of the computer technology. For example, AutoCAD is an interactive drawing software for two-dimensional and three-dimensional design developed by the American company Autodesk.

AutoCAD has an open architecture, which allows users and developers to extend and modify it using high-level programming languages, i.e., secondary development. The secondary development of AutoCAD is to extend its user interface, business logic and database access based on the open API of AutoCAD. After extracting the collected BOM (Bill of Materials) and BOP (Bill of Processing Items) metadata for generating drawings automatically, the present invention can utilize a CAD software with secondary development capabilities in the market to call the interface of the software with the secondary development capability, such as by calling automatic generation drawing API and function library of the AUTOCAD system, so that the graphic objects represented by the metadata can be generated automatically, and the information that needs to be known to workers is automatically added to the drawings, according to the needs of production.

For example, commonly used secondary development tools for CAD are: a. AutoLISP programming language, which may use script commands to call the function library of AutoCAD, and execute built-in commands of AutoCAD, and etc., to complete a series of automation or semi-automation tasks, and b. Autocad.Net API, based on which, automatic drawings may be developed by using C # language, and automation tasks of CAD graphics content may be identified.

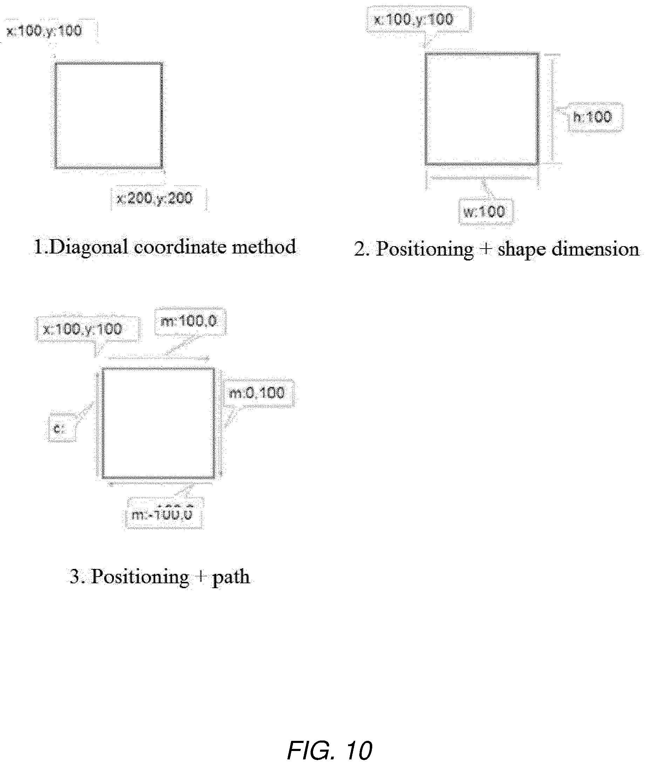

For example, as shown in FIG. 10, after the metadata about a rectangle in metadata are obtained, a 100 × 100 square-shaped rectangle can be drawn according to the following method:
1. Diagonal coordinate method
   The upper left corner coordinate: x: 100, y: 100, and the lower right corner coordinate: x: 200, y: 200
2. Positioning + shape dimension
   The upper left coordinate: x: 100, y: 100, width: 100, and height: 100
3. Positioning + path
   From the starting point coordinate (x: 100, y: 100), moving 100 along the positive direction of x (move: x: 100, y: 0), moving 100 along the positive direction of y (move: x: 0, y: 100), moving 100 along the negative direction of x (move: x: -100, y: 0), and finally closing with the starting point (close: start).

There are other methods, such as mirror, zoom up, zoom down, and overall offset, etc., through which the position and size of the geometry can be controlled.

### Automatic CAM programming

After definition of a product is completed, a processing program that can be run by a NC processing center is required before the confirmation of the production.

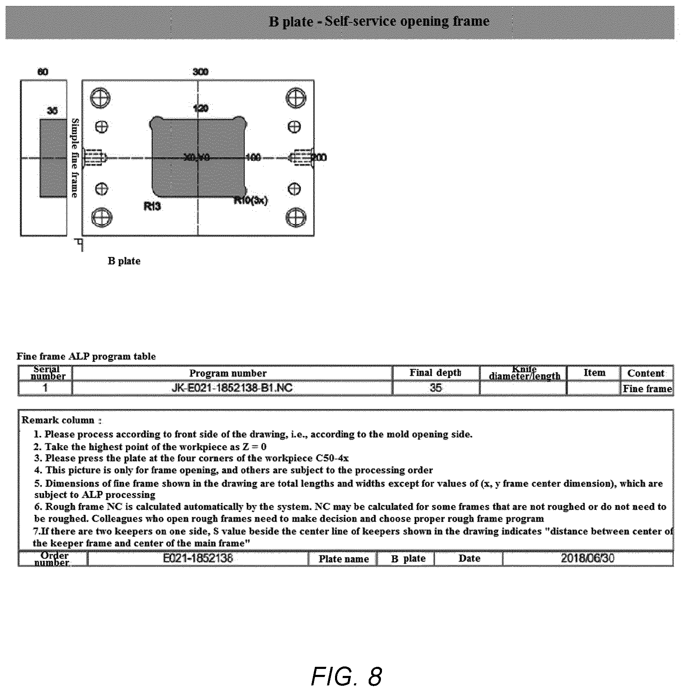

FIG. 8 shows a drawing automatically generated by an ALP programming system based on automatically acquired metadata required for a processing program.

After an order is generated automatically by the system, the combined metadata are passed to the ALP programming system. Since the information all required for generating a processing program has been obtained automatically by the ALP programming system, a drawing to be identified by the production stuff may be generated automatically without any human involvement.

According to the stored BOM and BOP metadata, a geometry of the generated CAD drawing is transformed into coordinate data and action data, and API and function library of a NC CAM software are called. In combination with a processing method library for specific processing items, a processing object represented by the metadata is automatically transformed into a processing program that can be executed by a processing center, in combined with.

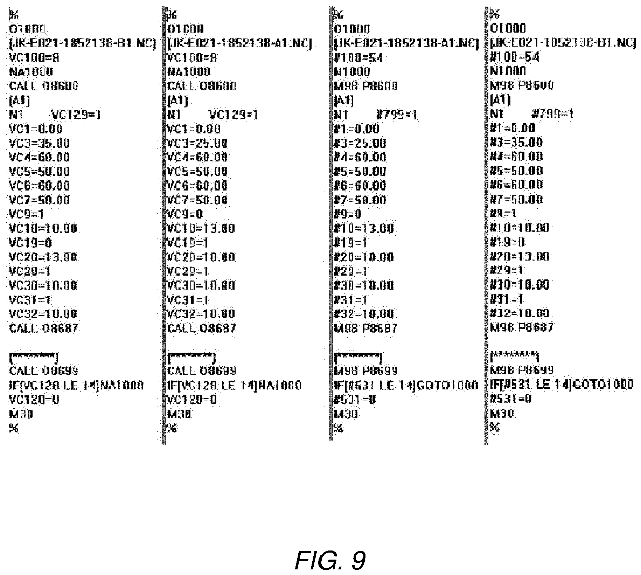

FIG. 9 shows a processing program automatically generated by an ALP programming system according to an embodiment of the present invention, wherein the processing program is called by a NC device.

A plurality of examples disclosed according to embodiments of the present invention are as follows.
Example 1. A method for obtaining metadata of a customized product, comprising: establishing, in a networked server, a standard product metadata repository for storing product data of a plurality of different types of standard products and a customized item metadata repository for storing alternative data of a customized item corresponding to each standard product; based on a type of a standard product being selected by a customer through a remote browser client, displaying via the server a 2D visualized image of the selected type of the standard product on the client, and providing one or more customized item options available for the selected type of the standard product; based on the one or more customized item options being selected by the customer through the remote browser client and for one or more post-processing item options, extracting alternative data corresponding to the selected customized items; and combining the product data of the standard product of the type selected by the customer and the extracted alternative data of the post-processing items to obtain metadata of the customized machined product.
Example 2. The method according to Example 1, wherein establishing a standard product metadata repository includes establishing a bill of materials (BOM) for each type of standard products, and defining each component in the BOM with one or more parameters, and stablishing a bill of processing items (BOP) for each type of standard products, and defining each processing item in the BOP with one or more parameters; and establishing a customized item metadata repository includes defining one or more post-processing items for each type of standard products, defining each post-processing item with one or more parameters and defining the numerical range of each of the one or more parameters.
Example 3. The method according to Example 2, further comprising displaying via the server a 2D visualized image of the selected post-processing item on the client, and providing options and parameter ranges available for the selected post-processing item.
Example 4. The method according to Example 3, further comprising, in response to the type of the standard product being selected by the customer through the remote browser client, finding BOM and BOP metadata of the selected standard product instance in the standard product metadata repository, and initializing the BOM and BOP metadata to the customer's order instance; in response to one or more post-processing items being selected by the customer, reading the BOM and BOP metadata and automatically transforming into visualized graphics of BOM and BOP objects corresponding to the standard product according to a mapping definition rule of the metadata, and drawing the visualized graphics on the browser; in response to values of each of post-processing item parameters input by the user, transforming between metadata in a Json format and visualization of the browser so that the visualized image drawn on the browser changes accordingly; and in response to the user's indication, inputting one or more post-processing items and sending the last updated metadata of the post-processing items from the browser to a back-end server, which combines the metadata of the post-processing items with the metadata of the selected standard product to obtain metadata of the customized product for the user.
Example 5. According to the method described in Example 2, wherein the one or more parameters defining the component include shape parameters and dimension parameters, and the one or more parameters defining the processing items include shape parameters and dimension parameters.
Example 6. According to the method described in Example 2, wherein for components of a complex assembly, sub-components for each component are defined firstly, each sub-component are then defined one by one with one or more parameters and stored in combination in a tree hierarchy structure.
Example 7. The method according to Example 2, wherein drawing the 2D visualized graphics on the browser is achieved by simulating CAD using a web technology.
Example 8. The method according to Example 1, wherein metadata for pricing from metadata of the customized product obtained after combination are extracted, the extracted metadata for pricing are sent to a pricing system, and a price of the customized product calculated by the pricing system is sent to the browser client.
Example 9. The method according to Example 8, wherein the metadata for pricing include texture and dimension information of BOM materials, processing category and dimension information of BOP processing items, and texture and dimension information of post-processing items.
Example 10. The method according to Example 8, wherein calculating, by the pricing system, the price of the customized product, comprises: calculating the total weight of each material based on the dimension information of the BOM material in the combined metadata and calculating the price for the material based on unit price of the material; and calculating the required man-hours of the processing item based on the dimension information of each processing item in the combined metadata and calculating the price of the processing item based on unit price of the processing item.
Example 11. According to the method described in Example 9, further comprising iteratively adding the calculated prices of the materials and the calculated prices of the processing items based on the tree hierarchy structure of the stored sub-components, to obtain the overall price of the customized product.
Example 12. The method according to Example 1, further comprising extracting metadata for generating a drawing automatically from metadata of the customized product obtained after combination, and calling an automatic drawing generation API and function library of a AUTOCAD system to automatically generate a graphic object represented by the metadata.
Example 13. The method according to Example 1, wherein API and function library of a NC CAM software are called based on the metadata of the customized product obtained after combination, to automatically transform the processing object represented by the metadata into a processing program that can be executed by a processing center, in combination with a processing method library for a specific processing item.
Example 14. A non-transitory computer-readable medium having software instructions stored thereon, which, when executed by a processor, cause the processor to perform the method of any of Examples 1-12.
Example 15. A system for customizing a machined product, including: a standard product metadata repository for storing product data of a plurality of different types of standard products; a customized item metadata repository for storing alternative data of a customized item corresponding to each standard product; a display component for, based on a type of a standard product being selected by a customer through a remote browser client, displaying a 2D visualized image of the selected type of the standard product on the client, and providing one or more customized item options available for the selected type of the standard product; a customized data extracting component for, based on the one or more customized item options being selected by the customer through the remote browser client and for one or more post-processing item options, extracting alternative data corresponding to the selected customized items; a calculating component for combining the product data of the standard product of the type selected by the customer and the extracted alternative data of the post-processing items to obtain metadata of the customized product; and a pricing component for extracting metadata for pricing from metadata of the customized product obtained after combination, and sending a calculated price of the customized product to the user's browser client.
Example 16. The system according to Example 15, wherein the standard product metadata repository includes: a bill of materials (BOM) for each type of standard products, wherein each component in the BOM is defined with one or more parameters, and a bill of processing items (BOP) for each type of standard products, wherein each processing item in the BOP is defined with one or more parameters; and the customized item metadata repository includes: one or more post-processing items defined for each type of standard products, wherein each post-processing item is defined with one or more parameters and the numerical range of each parameter is defined.
Example 17. The system according to Example 16, wherein a 2D visualized image of the selected post-processing item is displayed via the server on the client, and options and parameter ranges available for the selected post-processing item are provided.
Example 18. The system according to Example 16, wherein the computing component is further for: in response to the type of the standard product being selected by the customer through the remote browser client, finding BOM and BOP metadata of the selected standard product instance in the standard product metadata repository, and initializing the BOM and BOP metadata to the customer's order instance; in response to one or more post-processing items being selected by the customer, reading the BOM and BOP metadata and automatically transforming into visualized graphics of BOM and BOP objects corresponding to the standard product according to a mapping definition rule of the metadata, and drawing the visualized graphics on the browser; in response to values of each of post-processing item parameters input by the user, transforming between metadata in a Json format and visualization of the browser so that the visualized image drawn on the browser changes accordingly; and in response to the user's indication, inputting one or more post-processing items and sending the last updated metadata of the post-processing items from the browser to a back-end server, which combines the metadata of the post-processing items with the metadata of the selected standard product to obtain metadata of the customized product for the user.
Example 19. The system according to Example 16, wherein drawing the 2D visualized graphics on the browser is achieved by the display component simulating CAD with a web technology.
Example 20. The system according to Example 16, wherein the metadata for pricing include texture and dimension information of BOM materials, processing category and dimension information of BOP processing items, and texture and dimension information of post-processing items.
Example 21. The system according to Example 20, wherein the pricing component calculates the total weight of each material based on the dimension information of the BOM material in the combined metadata and the price for the material based on unit price of the material; and calculates the required man-hours of the processing item based on the dimension information of each processing item in the combined metadata and the price of the processing item based on unit price of the processing item.
Example 22. The method according to example 20, wherein the calculated prices of the materials and the calculated prices of the processing items are iteratively added based on the tree hierarchy structure of the stored sub-components, to obtain the overall price of the customized product.
Example 23. The system according to Example 15, further comprising: a drawing component for extracting metadata for generating a drawing automatically from metadata of the customized product obtained after combination, and calling an automatic drawing generation API and function library of a AUTOCAD system to automatically generate a graphic object represented by the metadata.
Example 24. The system according to Example 15, further comprising: a producing component of a processing program for calling API and function library of a NC CAM software based on the metadata of the customized product obtained after combination, to automatically transform the processing object represented by the metadata into a processing program that can be executed by a processing center, in combination with a processing method library for a specific processing item.

Although the present invention has been described in detail with reference to specific exemplary embodiments, those skilled in the art will understand that various changes can be made specifically in the implementation without departing from concept and scope of the present invention defined by the claims supported by the description and the accompanying drawings. Furthermore, in the case where the exemplary embodiments are described with reference to a specific number of elements, it will be understood that the exemplary embodiments can be implemented by using fewer or more elements than the specific number of elements.

## Claims

**1.** A method for obtaining metadata of a customized product, comprising:
establishing, in a networked server, a standard product metadata repository for storing product data of a plurality of different types of standard products and a customized item metadata repository for storing alternative data of a customized item corresponding to each standard product;
based on a type of a standard product being selected by a customer through a remote browser client, displaying via the server a 2D visualized image of the selected type of the standard product on the client, and providing one or more customized item options available for the selected type of the standard product;
based on the one or more customized item options being selected by the customer through the remote browser client and for one or more post-processing item options, extracting alternative data corresponding to the selected customized items; and
combining the product data of the standard product of the type selected by the customer and the extracted alternative data of the post-processing items to obtain metadata of the customized machined product.

**2.** The method according to claim 1, wherein:
establishing a standard product metadata repository includes
establishing a bill of materials (BOM) for each type of standard products, and defining each component in the BOM with one or more parameters, and
establishing a bill of processing items (BOP) for each type of standard products, and defining each processing item in the BOP with one or more parameters, and
establishing a customized item metadata repository includes
defining one or more post-processing items for each type of standard products, defining each post-processing item with one or more parameters and defining the numerical range of each of the one or more parameters.

**3.** The method according to claim 2, further comprising displaying via the server a 2D visualized image of the selected post-processing item on the client, and providing options and parameter ranges available for the selected post-processing item.

**4.** The method according to claim 3, further comprising
in response to the type of the standard product being selected by the customer through the remote browser client, finding BOM and BOP metadata of the selected standard product instance in the standard product metadata repository, and initializing the BOM and BOP metadata to the customer's order instance,
in response to one or more post-processing items being selected by the customer, reading the BOM and BOP metadata and automatically transforming into visualized graphics of BOM and BOP objects corresponding to the standard product according to a mapping definition rule of the metadata, and drawing the visualized graphics on the browser;
in response to values of each of post-processing item parameters input by the user, transforming between metadata and visualization of the browser so that the visualized image drawn on the browser changes accordingly; and
in response to the user's indication, inputting one or more post-processing items and sending the last updated metadata of the post-processing items from the browser to a back-end server, which combines the metadata of the post-processing items with the metadata of the selected standard product to obtain metadata of the customized product for the user.

**5.** The method according to claim 4, wherein transformation between visualization of the browser and metadata in a Json format enables the visualized image drawn on the browser to change accordingly.

**6.** The method according to claim 2, wherein the one or more parameters defining the component include shape parameters and dimension parameters, and the one or more parameters defining the processing items include shape parameters and dimension parameters.

**7.** The method according to claim 2, wherein for components of a complex assembly, sub-components for each component are defined firstly, and each sub-component is then defined one by one with one or more parameters and stored in combination in a tree hierarchy structure.

**8.** The method according to claim 2, wherein drawing the 2D visualized graphics on the browser is achieved by simulating CAD using a web technology.

**9.** The method according to claim 1, wherein metadata for pricing from metadata of the customized product obtained after combination are extracted, the extracted metadata for pricing are sent to a pricing system, and a price of the customized product calculated by the pricing system is sent to the browser client.

**10.** The method according to claim 9, wherein the metadata for pricing include texture and dimension information of BOM materials, processing category and dimension information of BOP processing items, and texture and dimension information of post-processing items.

**11.** The method according to claim 10, wherein calculating, by the pricing system, the price of the customized product, comprises: calculating the total weight of each material based on the dimension information of the BOM material in the combined metadata and calculating the price for the material based on unit price of the material; and calculating the required man-hours of the processing item based on the dimension information of each processing item in the combined metadata and calculating the price of the processing item based on unit price of the processing item.

**12.** The method according to claim 11, further comprising iteratively adding the calculated prices of the materials and the calculated prices of the processing items based on the tree hierarchy structure of the stored sub-components, to obtain the overall price of the customized product.

**13.** The method according to claim 1, further comprising extracting metadata for generating a drawing automatically from metadata of the customized product obtained after combination, and calling an automatic drawing generation API and function library of a AUTOCAD system to automatically generate a graphic object represented by the metadata.

**14.** The method according to claim 1, wherein API and function library of a NC CAM software are called based on the metadata of the customized product obtained after combination, to automatically transform the processing object represented by the metadata into a processing program that can be executed by a processing center, in combination with a processing method library for a specific processing item.

**15.** A non-transitory computer-readable medium having software instructions stored thereon, which, when executed by a processor, cause the processor to perform the method of any of claims 1-13.

**16.** A system for customizing a machined product, including
a standard product metadata repository for storing product data of a plurality of different types of standard products;
a customized item metadata repository for storing alternative data of a customized item corresponding to each standard product;
a display component for, based on a type of a standard product being selected by a customer through a remote browser client, displaying a 2D visualized image of the selected type of the standard product on the client, and providing one or more customized item options available for the selected type of the standard product;
a customized data extracting component for, based on the one or more customized item options being selected by the customer through the remote browser client and for one or more post-processing item options, extracting alternative data corresponding to the selected customized items;
a calculating component for combining the product data of the standard product of the type selected by the customer and the extracted alternative data of the post-processing items to obtain metadata of the customized product; and
a pricing component for extracting metadata for pricing from metadata of the customized product obtained after combination, and sending a calculated price of the customized product to the user's browser client.

**17.** The system according to claim 16, wherein the standard product metadata repository includes: a bill of materials (BOM) for each type of standard products, wherein each component in the BOM is defined with one or more parameters, and a bill of processing items (BOP) for each type of standard products, wherein each processing item in the BOP is defined with one or more parameters; and
the customized item metadata repository includes: one or more post-processing items defined for each type of standard products, wherein each post-processing item is defined with one or more parameters and the numerical range of each parameter is defined.

**18.** The system according to claim 16, wherein a 2D visualized image of the selected post-processing item is displayed via the server on the client, and options and parameter ranges available for the selected post-processing item are provided.

**19.** The system according to claim 17, wherein the computing component is further for:
in response to the type of the standard product being selected by the customer through the remote browser client, finding BOM and BOP metadata of the selected standard product instance in the standard product metadata repository, and initializing the BOM and BOP metadata to the customer's order instance,
in response to one or more post-processing items being selected by the customer, reading the BOM and BOP metadata and automatically transforming into visualized graphics of BOM and BOP objects corresponding to the standard product according to a mapping definition rule of the metadata, and drawing the visualized graphics on the browser;
in response to values of each of post-processing item parameters input by the user, transforming between metadata and visualization of the browser so that the visualized image drawn on the browser changes accordingly; and
in response to the user's indication, inputting one or more post-processing items and sending the last updated metadata of the post-processing items from the browser to a back-end server, which combines the metadata of the post-processing items with the metadata of the selected standard product to obtain metadata of the customized product for the user.

**20.** The system according to claim 17, wherein drawing the 2D visualized graphics on the browser is achieved by the display component simulating CAD with a web technology.

**21.** The system according to claim 19, wherein transformation between metadata in a Json format and visualization of the browser enables the visualized image drawn on the browser to change accordingly.

**22.** The system according to claim 18, wherein the metadata for pricing include texture and dimension information of BOM materials, processing category and dimension information of BOP processing items, and texture and dimension information of post-processing items.

**22.** The system according to claim 21, wherein the pricing component calculates the total weight of each material based on the dimension information of the BOM material in the combined metadata and the price for the material based on unit price of the material; and calculates the required man-hours of the processing item based on the dimension information of each processing item in the combined metadata and the price of the processing item based on unit price of the processing item.

**23.** The system according to claim 21, wherein the calculated prices of the materials and the calculated prices of the processing items are iteratively added based on the tree hierarchy structure of the stored sub-components, to obtain the overall price of the customized product.

**24.** The system according to claim 16, further comprising:
a drawing component for extracting metadata for generating a drawing automatically from metadata of the customized product obtained after combination, and calling an automatic drawing generation API and function library of a AUTOCAD system to automatically generate a graphic object represented by the metadata.

**25.** The system according to claim 16, further comprising:
a producing component of a processing program, for calling API and function library of a NC CAM software based on the metadata of the customized product obtained after combination, to automatically transform the processing object represented by the metadata into a processing program that can be executed by a processing center, in combination with a processing method library for a specific processing item.
